# EUROPÄISCHE PATENTSCHRIFT

(11) **EP 2 014 516 B1**
(45) Veröffentlichungstag und Bekanntmachung des Hinweises auf die Patenterteilung: **02.10.2013**
(21) Anmeldenummer: 08010101.7
(22) Anmeldetag: 03.06.2008
(51) Int. Cl.: B60R 19/18

(54) **Vorbau eines Kraftfahrzeugs**
Front end for a motor vehicle
Façade avant d'un véhicule automobile

(30) Priorität: 10.07.2007 DE 102007032031
(43) Veröffentlichungstag der Anmeldung: 14.01.2009
(73) Patentinhaber: Dr. Ing. h.c. F. Porsche AG, 70435 Stuttgart (DE); CW Concept Consulting GmbH, 8101 Gratkorn, Graz (AT)
(72) Erfinder: Kusche, Jörg, 75248 Oelbronn-Duerrn (DE); Soellner, Michael, 71120 Grafenau-Döffingen (DE); Danev, Dimitar, 71272 Renningen (DE); Schwinger, Ferdinand, 8051 Graz (AT)

(56) Entgegenhaltungen:
- EP-A1- 0 254 530
- EP-A2- 1 103 428
- EP-A2- 1 422 110
- DE-A1- 19 648 804
- US-A1- 2003 132 640

## Beschreibung

Die Erfindung betrifft einen Vorbau eines Kraftfahrzeugs, insbesondere eines Kraftwagens.

Aus dem Serienfahrzeugbau ist es bekannt, einem dem Vorbau zugeordneten Stoßfängerquerträger ein Energieabsorptionselement, insbesondere ein Schaumstoffprallelement, vorzulagern, um bei einem Aufprall Energie zu absorbieren.

Aus der DE 102 34 038 A1 ist ein Vorbau eines Kraftwagens bekannt, der einen Stoßfängerquerträger umfasst, dem - in Fahrtrichtung gesehen - ein Schaumstoffteil vorgelagert ist. Zur Erfüllung des Pendelschlagtest und des Lower-Leg-Tests wird in der DE 102 34 038 A1 vorgeschlagen, dass das Schaumstoffteil zumindest partiell Noppen oder Vertiefungen aufweist. Mit dieser Noppenkontur kann auf Schäume bzw. Schaumstoffe mit höherem Raumgewicht zurückgegriffen werden. Dadurch werden die Eindringtiefen des Pendels beim Pendelschlag reduziert.

Die vorveröffentlichte EP 1 103 428 A2 offenbart beispielhaft den Vorbau eines Kraftfahrzeugs, insbesondere eines Kraftwagens, mit
- einem Stoßfängerquerträger (9) und
- einem dem Stoßfängerquerträger (9,10) - in Fahrtrichtung gesehen - vorgelagerten Energieabsorptionselement (14)
- wobei in die frontseitige Außenkontur des Energieabsorptionselements eine Vielzahl von Aussparungen (18) eingeformt sind, wobei zumindest einige der Aussparungen (18) das Energieabsorptionselement (14) über dessen gesamte Tiefe vollständig durchsetzen, wodurch eine Vielzahl von Durchbrüchen im Energieabsorptionselement (14) angeordnet sind, wobei sich ein Element (20) zumindest teilweise in einen der Durchbrüche hinein erstreckt wobei mehrere Elemente (20) durch Stege (21) zu einem Einlegerteil, welches in die Aussparungen (18) eingelegt wird, zusammengefasst sind.

Bei immer weiter reduzierten Deformationsräumen im Vorbaubereich reichen die Noppen oder Vertiefungen unter Umständen nicht aus, um einen optimalen Energieabbau zu realisieren.

Die Aufgabe der Erfindung besteht daher darin, den Vorbau eines Kraftfahrzeugs, insbesondere eines Kraftwagens, dahingehend zu verbessern, dass bei reduziertem Bauraum ein optimaler Energieabbau und damit eine bestmögliche Schutzfunktion für den Beinaufprall gewährleistet ist.

Diese Aufgabe wird erfindungsgemäß mit den Merkmalen des Patentanspruchs 1.

Vorteilhafte Ausgestaltungen der Erfindung ergeben sich aus den Unteransprüchen.

Der Stoßfängerquerträger ist an die Tragstruktur des Kraftwagenvorbaus angeschlossen und dient zur Aufnahme und Weiterleitung von Aufprallkräften in die Tragstruktur. Vorzugsweise sind zwischen dem Stoßfängerquerträger und den beiden vorderen, zur Tragstruktur gehörenden Längsträger Crashboxen angeordnet.

Das Energieabsorptionselement gewährleistet den Energieabbau in der Regel durch Zusammenpressen des verwendeten Schaummaterials. Für Unfälle mit anderen Fahrzeugen soll möglichst viel Energie abgebaut werden, so dass dafür harter Schaum verwendet wird. Für Unfälle mit einem Fußgänger sollen jedoch große Eindringtiefen ermöglicht werden, damit die Belastungswerte, wie Kniebiegwinkel, Scherung und Beschleunigungswerte, niedrig gehalten werden können. Dafür ist relativ weicher Schaum notwendig.

In die frontseitige Außenkontur des dem Stoßfängerquerträger vorgelagerten Energieabsorptionselements sind eine Vielzahl von Aussparungen eingeformt, die das Energieabsorptionselement über dessen gesamte Tiefe vollständig durchsetzen. Damit sind in dem Energieabsorptionselement eine Vielzahl von lochähnlichen Aussparungen angeordnet. Hierdurch lassen sich härtere Schäume oder Materialien einsetzen, um den für den Pendelschlag notwendigen Energieabbau zu ermöglichen. Gleichzeitig kann das Material der die Aussparung umgebenden Brückenbereiche in die Aussparungen ausweichen. Durch die erfindungsgemäßen Durchbrüche kann die Restblocklänge des Energieabsorptionselements weiter reduziert werden.

In einer vorteilhaften Ausgestaltung der Erfindung erstrecken sich die Aussparungen über nahezu die gesamte Breite des Energieabsorptionselements. Dadurch wird über den gesamten Vorbau ein relativ gleichmäßiger Energieabbau ermöglicht.

Dies wird unterstützt, wenn sich die Aussparungen auf nahezu gleicher Höhe befinden.

Um die fehlende Anfangssteifigkeit des Energieabsorptionselements zu kompensieren, erstrecken sich crashboxähnliche Elemente zumindest teilweise in jeweils einen der Durchbrüche hinein. Dies wirkt sich insbesondere für eine verbesserte Anfangssteifigkeit beim Beinanprall positiv für die Energieabsorption auf. Gleichzeitig liefern die Brückenbereiche zwischen den Aussparungen die für den Fußgängeranprall gewünschte Weichheit des Energieabsorptionselements. Die crashboxähnlichen Elemente bewirken bei geringer Schaumtiefe eine optimale Nutzung des Deformationsweges in dem es die fehlende Anfangssteifigkeit des Schaumteils zu kompensieren.

Erfindungsgemäß ist, daß mehrere der crashboxähnlichen Elemente in einem Einlegerteil zusammengefasst sind. Damit kann das Einlegerteil einfach von hinten in die Durchbrüche des Energieabsorptionselements eingebracht, insbesondere eingelegt, und gemeinsam mit diesem an dem Stoßfängerquerträger befestigt werden.

Es hat sich gezeigt, dass ein kegelstumpfartiger Querschnitt der crashboxähnlichen Elemente optimale Energieabsorptionswerte ergeben, wobei die Basis des Kegelstumpfs zur Rückseite des Energieabsorptionselements ausgerichtet ist. D.h., der schmalere Kegelstumpfkopf ist zur Außenkontur des Energieabsorptionselements ausgerichtet.

Vorteile für die Herstellung ergeben sich, wenn das crashboxähnliche Element kegelstumpfförmig aufgebaut ist. Es lässt sich dann beispielsweise als Tiefziehteil fertigen.

Die Restblocklänge kann weiter reduziert werden, wenn die Seitenwände des crashboxähnlichen Elements mit Ausschnitten versehen sind, wodurch sich Wandstege ergeben. Je nach geforderten Energieabsorptionswerten kann eine einfache Anpassung durch die Auswahl der Materialart, der Materialstärke oder durch Variation der Anzahl und Größe der Ausschnitte erfolgen. In den Stegen können Sollbiegestellen vorgesehen sein, an denen das Bauteil zuerst versagt.

In einer bevorzugten Ausgestaltungsform der Erfindung können in einem definierten Bereich des Energieabsorptionselements keine crashboxähnlichen Elemente vorgesehen sein, die die Durchbrüche durchsetzen. Zudem kann in diesem definierten Bereich ganz auf Durchbrüche verzichtet werden und anstelle dessen Aussparungen bis zu einer bestimmten Tiefe vorgesehen werden.

Weitere vorteilhafte Ausgestaltungen der Erfindung werden im Folgenden anhand der Zeichnung erläutert. Dabei zeigen:
- Fig. 1: eine perspektivische Ansicht schräg von vorn auf ein Frontmodul eines Kraftwagens,
- Fig. 2: eine Detailansicht des Einlegers gemäß Fig. 1 sowie
- Fig. 3: eine Schnittdarstellung gemäß Linie III-III in Fig. 1.

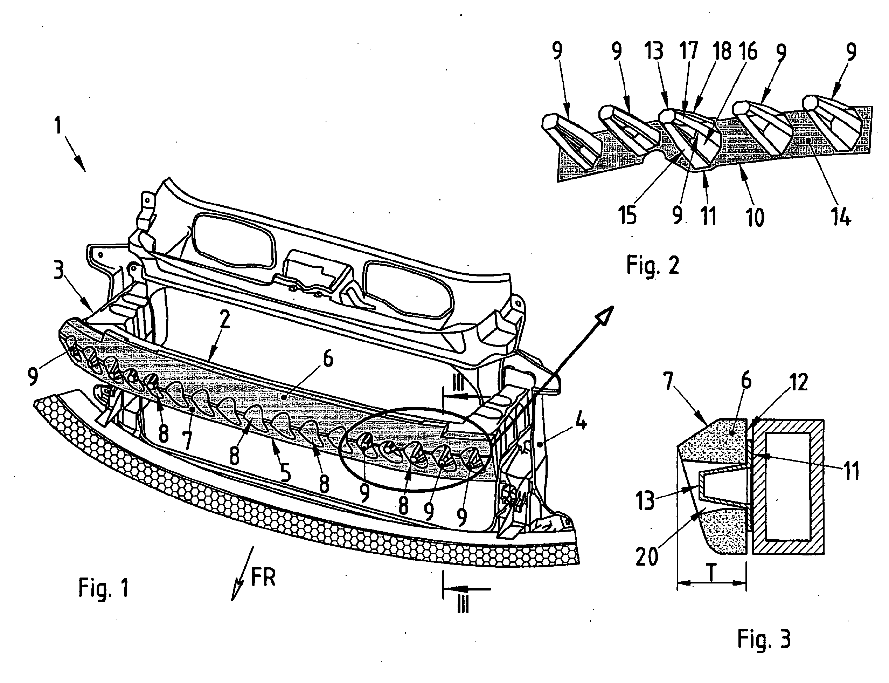

In Fig. 1 ist ein Frontmodul 1 mit einem Stoßfängerquerträger 2 dargestellt. Der Stoßfängerquerträger 2 ist über Crashboxen 3 und 4 an die Tragstruktur des Kraftwagens angeschlossen. Dem Stoßfängerquerträger 2 ist ein Energieabsorptionselement 5 in Fahrtrichtung FR vorgelagert. Das Energieabsorptionselement 5 ist ein Schaumteil 6, in dessen nach vorne weisende Außenkontur 7 eine Vielzahl von Aussparungen 8 eingeformt ist. Zumindest einige der Aussparungen 8 durchsetzen das Schaumteil 6 über dessen gesamte Tiefe T, so dass sich Durchbrüche 20 ergeben.

Während im mittleren Bereich des Schaumteils 6 keine crashboxähnlichen Elemente in den Durchgangslöchern 8 angeordnet sind, befinden sich beidseitig des mittleren Bereichs crashboxähnliche Elemente 9 in den Durchbrüchen 20.

Wie sich aus der Detaildarstellung in Fig. 2 ergibt, sind mehrere dieser crashboxähnlichen Elemente 9, in diesem Fall fünf Elemente, zu einem Einleger 10 zusammengefasst. Die crashboxähnlichen Elemente 9 haben jeweils einen kegelstumpfförmigen Querschnitt, was sich insbesondere aus der schematischen Darstellung von Fig. 3 entnehmen lässt. Die Basis 11 des Kegelstumpfs ist der Rückseite 12 des Schaumteils 6 zugeordnet, wogegen der Kegelstumpfkopf 13 der Außenkontur 7 zugerichtet ist. Die Basen 11 der crashboxähnlichen Elemente 9 sind durch eine gemeinsame Platte 14 miteinander verbunden. Das Energieabsorptionsvermögen der crashboxähnlichen Elemente 9 kann beeinflusst werden, indem in die Seitenwand 15 Ausschnitte 16 eingebracht werden, so dass für die Wand nur noch Stege 17 stehen bleiben. Für eine gezielte Verformung bei einer Krafteinwirkung gemäß Pfeilrichtung F sind in den Stegen 17 Sollbiegestellen 18 vorgesehen.

Die Montage von Schaumteil 6 und Einlegerteil 10 kann formschlüssig erfolgen, indem der Durchmesser der Durchbrüche 20 an der Rückseite 12 des Schaumteils 6 geringfügig kleiner ist als der Durchmesser der Basis 11 des Einlegerteils. Zusammen können dann das Schaumteil 6 und das Einlegerteil 10 am Querträger 2 form- oder kraftschlüssig befestigt werden.

## Patentansprüche

1. Vorbau eines Kraftfahrzeugs, insbesondere eines Kraftwagens, mit
- einem Stoßfängerquerträger (2) und
- einem dem Stoßfängerquerträger (2) - in Fahrtrichtung gesehen - vorgelagerten als Schaumstoffprallelement (6) ausgebildetem Energieabsorptionselement
- wobei in die frontseitige Außenkontur (7) des Schaumstoffprallelements (6) eine Vielzahl von Aussparungen (8) eingeformt sind, wobei zumindest einige der Aussparungen (8) das Schaumstoffprallelement (6) über dessen gesamte Tiefe vollständig durchsetzen, wodurch eine Vielzahl von Durchbrüchen (20) im Schaumstoffprallelement (6) angeordnet sind, wobei sich ein crashboxähnliches Element (9) zumindest teilweise in einen der Durchbrüche (20) hinein erstreckt,
wobei
mehrere crashboxähnliche Elemente (9) in einem Einlegerteil (10) zusammengefasst sind.

2. Vorbau nach Anspruch 1,
**dadurch gekennzeichnet,**
**dass** sich die Aussparungen (8) über nahezu die gesamte Breite des Schaumstoffprallelements (6) erstrecken.

3. Vorbau nach Anspruch 1 oder 2,
**dadurch gekennzeichnet,**
**dass** sich die Aussparungen (8) auf nahezu gleicher Höhe über die gesamte Breite des Schaumstoffprallelements (6) erstrecken.

4. Vorbau nach Anspruch 1 oder 3,
**dadurch gekennzeichnet,**
**dass** das crashboxähnliche Element (9) einen kegelstumpfförmigen Querschnitt aufweist, wobei die Basis (11) zur Rückseite (12) des Schaumstoffprallelements (6) ausgerichtet ist.

5. Vorbau nach Anspruch 4,
**dadurch gekennzeichnet,**
**dass** das crashboxähnliche Element (9) eine Topfform aufweist.

6. Vorbau nach Anspruch 5,
**dadurch gekennzeichnet,**
**dass** die Seitenwände (15) des crashboxähnlichen Elements (9) mit Ausschnitten (16) versehen sind, wodurch sich Stege (17) ergeben.

7. Vorbau nach Anspruch 6,
**dadurch gekennzeichnet,**
**dass** die Stege (17) mit Sollbiegestellen (18) versehen sind.

8. Vorbau nach einem der vorgenannten Ansprüche,
**dadurch gekennzeichnet,**
**dass** in einem definierten Bereich des Schaumstoffprallelements (6) keine crashboxähnlichen Elemente (9) die Aussparungen (8) durchsetzen.

9. Vorbau nach Anspruch 8,
**dadurch gekennzeichnet,**
**dass** beidseitig des definierten Bereichs crashboxähnliche Elemente (9) die Aussparungen (8), Insbesondere die Durchbrüche (9), durchsetzen.

## Claims

1. Front end of a motor vehicle, in particular of a motor car, comprising
- a bumper crossmember (2) and
- an energy absorption element which is designed as a foam impact element (6) and which - as seen in the direction of travel - is mounted upstream of the bumper crossmember (2),
- wherein a plurality of cutouts (8) are formed into the front outer contour (7) of the foam impact element (6), wherein at least some of the cutouts (8) pass completely through the foam impact element (6) over its entire depth, with the result that a plurality of through-passages (20) are arranged in the foam impact element (6), wherein a crashbox-like element (9) extends at least partially into one of the through-passages (20),
wherein a plurality of crashbox-like elements (9) are combined in an insert part (10).

2. Front end according to Claim 1, **characterized in that** the cutouts (8) extend over virtually the entire width of the foam impact element (6).

3. Front end according to Claim 1 or 2, **characterized in that** the cutouts (8) extend at virtually the same height over the entire width of the foam impact element (6) .

4. Front end according to Claim 1 or 3, **characterized in that** the crashbox-like element (9) has a frustoconical cross section, wherein the base (11) is oriented towards the rear side (12) of the foam impact element (6).

5. Front end according to Claim 4, **characterized in that** the crashbox-like element (9) has a cup shape.

6. Front end according to Claim 5, **characterized in that** the side walls (15) of the crashbox-like element (9) are provided with cutouts (16), with the result that webs (17) are formed.

7. Front end according to Claim 6, **characterized in that** the webs (17) are provided with predetermined bending points (18).

8. Front end according to one of the preceding claims, **characterized in that** no crashbox-like elements (9) pass through the cutout (8) in a defined region of the foam impact element (6).

9. Front end according to Claim 8, **characterized in that** crashbox-like elements (9) pass through the cutouts (8), in particular through the through-passages (20), on both sides of the defined region.

## Revendications

1. Structure avant de la carrosserie d'un véhicule automobile, en particulier d'une voiture, comprenant
- une traverse de pare-chocs (2) et
- un élément d'absorption d'énergie monté devant la traverse de pare-chocs (2) - vu dans la direction de conduite - et réalisé sous forme d'élément d'impact en mousse (6),
- une pluralité d'évidements (8) étant pratiqués dans le contour extérieur frontal (7) de l'élément d'impact en mousse (6), au moins certains des évidements (8) traversant complètement l'élément d'impact en mousse (6) sur toute sa profondeur, de sorte qu'une pluralité d'orifices (20) soient formés dans l'élément d'impact en mousse (6), un élément (9) de type boîte "crash" s'étendant au moins en partie dans l'un des orifices (20),
plusieurs éléments (9) de type boîte "crash" étant réunis en une pièce d'insert (10).

2. Structure avant de carrosserie selon la revendication 1,
**caractérisée en ce que**
les évidements (8) s'étendent sur pratiquement toute la largeur de l'élément d'impact en mousse (6).

3. Structure avant de carrosserie selon la revendication 1 ou 2,
**caractérisée en ce que**
les évidements (8) s'étendent pratiquement à la même hauteur sur toute la largeur de l'élément d'impact en mousse (6).

4. Structure avant de carrosserie selon la revendication 1 ou 3,
**caractérisée en ce que**
l'élément (9) de type boîte "crash" présente une section transversale de forme tronconique, la base (11) étant orientée vers la face arrière (12) de l'élément d'impact en mousse (6).

5. Structure avant de carrosserie selon la revendication 4,
**caractérisée en ce que**
l'élément (9) de type boîte "crash" présente une forme de pot.

6. Structure avant de carrosserie selon la revendication 5,
**caractérisée en ce que**
les parois latérales (15) de l'élément (9) de type boîte "crash" sont munies de découpes (16) de manière à former des nervures (17).

7. Structure avant de carrosserie selon la revendication 6,
**caractérisée en ce que**
les nervures (17) sont pourvues de zones destinées à fléchir (18).

8. Structure avant de carrosserie selon l'une quelconque des revendications précédentes,
**caractérisée en ce que**
dans une région définie de l'élément d'impact en mousse (6), aucun élément (9) de type boîte "crash" ne traverse les évidements (8).

9. Structure avant de carrosserie selon la revendication 8,
**caractérisée en ce que**
de chaque côté de la région définie, des éléments (9) de type boîte "crash" traversent les évidements (8), en particulier les orifices (20).
